Europäisches Patentamt

European Patent Office

Office européen des brevets

(19)

(11) Publication number: **0 130 666**
A2

# (12) EUROPEAN PATENT APPLICATION

(21) Application number: **84302640.2**

(22) Date of filing: **18.04.84**

(51) Int. Cl.⁴: **B 65 D 5/40, B 65 D 5/70**

(30) Priority: **04.05.83 US 491469**
**15.11.83 US 551804**

(43) Date of publication of application: **09.01.85**
**Bulletin 85/2**

(84) Designated Contracting States: **CH DE FR GB IT LI SE**

(71) Applicant: **International Paper Company, 77 West 45th Street New York, New York 10036 (US)**

(72) Inventor: **Nilsson, Lars E.W., 254 Riverside Avenue, Riverside Connecticut 06878 (US)**
Inventor: **Brauner, Arne H., 2 Court Jester, Washington Crossing, PA 18977 (US)**

(74) Representative: **Seaborn, George Stephen et al, c/o Edward Evans & Co. Chancery House 53-64 Chancery Lane, London WC2A 1SD (GB)**

(54) Carton with hinged opening flap and carton with perforated hinged opening flap.

(57) A carton (8) formed of paperboard coated with one or more liquid impervious layers and particularly adapted to aseptically package a liquid foodstuff such as milk or fruit juice. The carton is formed directly from a continuous web, wherein the paper fibers in the web are oriented in the direction that will parallel the horizontal axis of the formed and filled carton. The carton is in the form of a rectangular parallelepiped having a fin seam (26) running along its two side walls (16, 18) and its bottom wall (20). Each of the four narrowest edges carries a triangular flap ear or corner fold (30, 32, 34, 36) normally folded against the side wall of this carton. One (30) of the top triangular ears carries a pair of score or perforated lines (60, 62) which extend into the top wall, this ear swinging away from the carton upon opening, to thereby define a reclosable pour opening upon rupture of the score lines. The carton of this invention exhibits a flat top (22), free of a fin seam, and hence, is better suited for graphics (e.g. trademarks, brand names, color combinations), than other prior art containers which have a fin seam on their top surface. In the embodiment having perforated lines on the triangular ear, the perforated lines are so formed that no perforation crosses or intersects a fold line, thereby inhibiting delamination of the layers coated on the paperboard.

0130666

TITLE MODIFIED
see front page

- 1 -

## CARTON WITH HINGED OPENING
## AND CARTON WITH PERFORATED HINGED OPENING

## BACKGROUND OF THE INVENTION

This invention relates to a liquid container provided with an openable pour spout. The container is fashioned from a single sheet of paperboard, the paperboard being provided on at least the inside of the container with a liquid impervious coating. Several layers of coating may be employed on one or both sheet sides.

## SUMMARY OF THE INVENTION

The container is in the general form of a rectangular parallelepiped, commonly termed a brick-type container, and it is formed from a paperboard web of indefinite length.

The container or carton of this invention is particularly adapted to hold and dispense liquid foodstuffs, such as milk and fruit juices. Containers of the type to which this invention relates are often referred to as aseptic containers, since aseptic conditions usually accompany the package forming and filling process.

The prior art is already aware of brick-style containers. For example, U.S. Patent 3,347,444 issued to Rausing, and U.S. Patent 3,232,514 issued to Swede, show packages adapted for the packaging of liquid foodstuffs and that have openable pour spouts.

In the cartons illustrated in these patents, the top or upper surface of the package contains a seam, commonly referred to as a fin seam. The seam is employed to close the top of the carton or container, the top having a pair of triangular fold ears, which usually fold down along the sides of the container, with at least one of the ears displaying an openable and pour spout defining means or feature.  Both containers require the removal and discarding of a portion of the fin seam and triangular ear.

According to the practice of this invention, a brick-shaped package for liquid foodstuffs is formed in such a manner that no fin seam is present on the top or upper surface.  The absence of a fin seam is significant in this art for the following reason.  In distinguishing the goods of one manufacturer or producer of liquid foodstuffs from those of another, different indicia such as trademarks, brand names, and color combinations (commonly termed graphics) are employed.  Since the liquid foodstuff of one producer is usually or often chemically and nutritionally similar to those of other producers, different graphics represent the best way for manufacturers and producers to distinguish their products from those of others in the market place.  In this same connection, it will be observed that one of the reasons for the popularity of paperboard containers for milk of the so-called gable top carton type, is that paperboard exhibits a greater ease of accepting graphics than glass.  The absence of a seam on the top of the carton of this invention enables a superior graphic display to be placed on top of the container.  Whether the container is placed upright on the shelves of a food market for customer selection or whether it is placed on one of its front or back faces, the flat top surface of this invention permits the use of graphics which are uninterrupted by the presence of a seam running through them.  Accordingly, the carton of this invention is not only of a different construction from that of the prior art, but yields the important advantage of better graphics on its top surface.

Further according to the practice of this invention, a brick shaped package for liquid foodstuffs is formed so as to define a pouring spout upon opening.  The pour spout is defined by a triangular flap ear integral with the package which in the unopened configuration lies against a side of the package or container.  A portion of the flap ear is typically lifted and ripped along perforated lines to thereby define the spout.  One embodiment of this invention shown herein uses perforations that are so located relative to certain fold or score lines that no perforation crosses a score line.  Further, in this embodiment the line of perforation that separates the opening flap from the rest of the flap ear of the package of this invention is provided with a cut at the outboard edge of the package, defined by two mating cuts on two different portions of the package, the cut facilitating initiation of the opening flap to open the package and form the pour spout.

The full nature of the invention will be understood from the accompanying drawings and the following description and claims.  It should be understood, however, that references in the following description to terms such as base, front, rear, and side wall members are for convenience of description, and such terms are not necessarily intended to be used in a limiting sense.

## BRIEF DESCRIPTION OF THE DRAWINGS

Figure 1 is a perspective view of the brick-style container of this invention in its filled and sealed state.

Figure 2 is an elevational view of the containers of Figure 1 and Figure 7.

Figure 3 illustrates the container of Figure 1 when opened.

Figure 4 illustrates a portion of a paperboard web of indefinite length from which the container of this invention may be fashioned.

Figure 5 is a view illustrating the containers of Figure 1, if the container were flattened.

Figure 6 is a cross-sectional view illustrating typical coatings for the paperboard web from which the container of Figures 1 and 7 are formed.

Figure 7 is a perspective view of the brick-style container of this invention in its filled and sealed state.

Figure 8 illustrates the container of Figure 7 when opened.

Figure 9 illustrates a portion of a paperboard web of indefinite length from which the container of this invention may be fashioned.

Figure 10 is a view illustrating the container of Figure 7, if the container were flattened.

Figure 11 is a plan view of an individual package of the container of Figure 7, the container having been opened along its fin seams and flattened.

Figure 12 is a view illustrating the detail of the perforated lines which form the spout of the container of Figure 7.

### DETAILED DESCRIPTION OF THE INVENTION

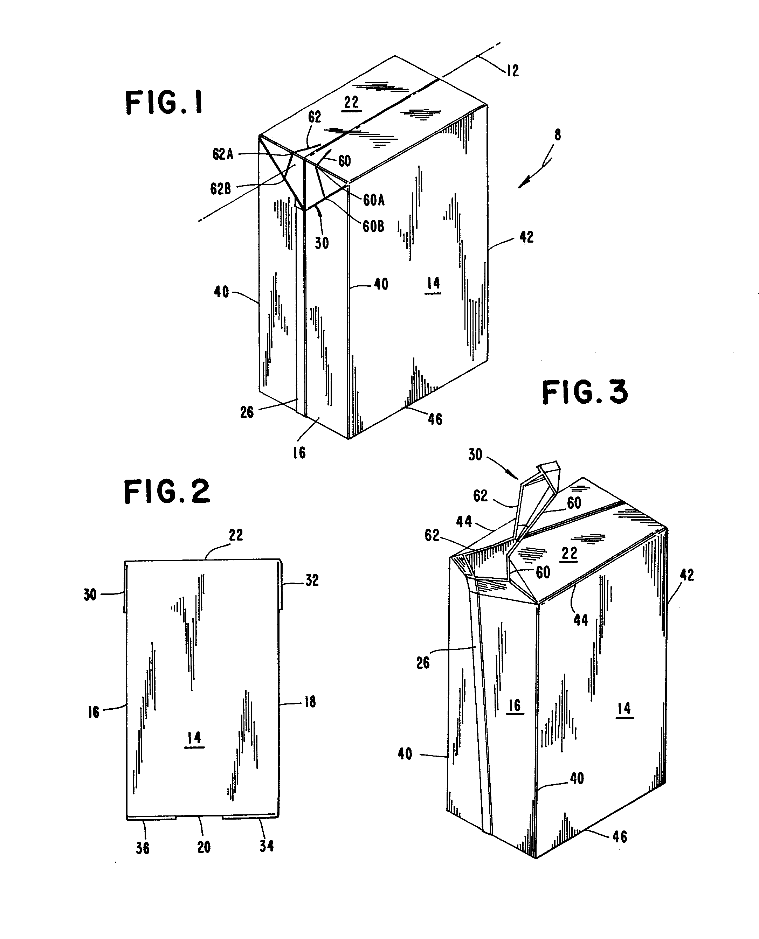

Referring now to Fig. 1 of the drawings, the numeral 8 denotes the container of this invention erected and filled with a liquid foodstuff, such as milk or fruit juice.

The container is preferably formed from a web of coated paperboard of indefinite length, as will be more particularly described later. The numeral 12 denotes a mid axis paperboard fold line or axis. The front wall of container 8 is denoted by the numeral 14, one side wall by the numeral 16, its opposite side wall by the numeral 18, its bottom wall by the numeral 20, its top wall by the numeral 22 and its rear wall by the numeral 24. The numeral 26 denotes a continuous fin seam running from the top wall 16, downwardly, thence across the bottom wall 20, and thence up the other side wall 18 to the other end of top wall 22. The numeral 30 denotes any one of four triangular flap ears.

Reference to Figure 2 shows triangular flap ear 30, and also illustrates the other three triangular flap ears, these being ears 32, 34, and 36. Triangular flap ears 30 and 32 are folded down against the sides of the carton or container 8, while triangular flap ears 34 and 36 are folded against the bottom wall 20. The exterior of the container often includes an outer coating of polyethylene, which may be heated to melt at the regions of contact with the triangular flap ears and thus hold the latter against the carton, as shown at Figure 2.

Again referring to Figure 1, the numerals 60 and 62 denote second or weakened lines running on a converging path as indicated from triangular flap ear 30 to respective end points 60A and 62A on top wall 22.

Figure 3 of the drawings shows the carton of Figure 1 when opened to define a pour spout. Opening is effected by pulling the central portion of ear 30 upwardly and around towards and into top surface 22 along scored or weakened lines 60 and 62, to thereby define a recloseable pour opening, denoted by the numeral 46, which is of sufficient size to permit smooth pouring of the contents of the container. In the condition of Figure 3, the liquid contents of the container or carton 8 may now be dispensed. After partial dispensing of the contents, triangular flap ear 30 and a portion of top wall 22 may be reclosed. It will be observed that the ripping of ear 30 causes a slight bulge in the upper portion of wall 16, as shown at Figure 3. It will be obvious that a similar opening feature can be provided on ear 32 and opposite end to top wall 22, if desired. In addition, if desired, a cut line or notch may be formed in ares 60B and 62B respectively, which extend from the edges of ear 30 into the body of same, along perforated lines 60 and 62, to facilitate the tearing open of the carton.

It should be noted that the containers 8 herein, unlike other brick-shaped packages known to the art, are formed from paperboard webs in which the paper fibers are oriented in the direction that will become the horizontal direction (or parallel to the horizontal axis) of the formed

0130666

and filled containers, when standing upright. Cartons formed from fibers oriented parallel to the horizontal axis are especially suitable for the recloseable opening described herein because the direction of the tear along weakened lines 60 and 62 is the same as the direction of the paper fibers, thereby facilitating the opening of said containers. As a result of this fiber orientation, the recloseable opening of the present invention does not risk compromising the integrity of the aseptically formed and filled containers.

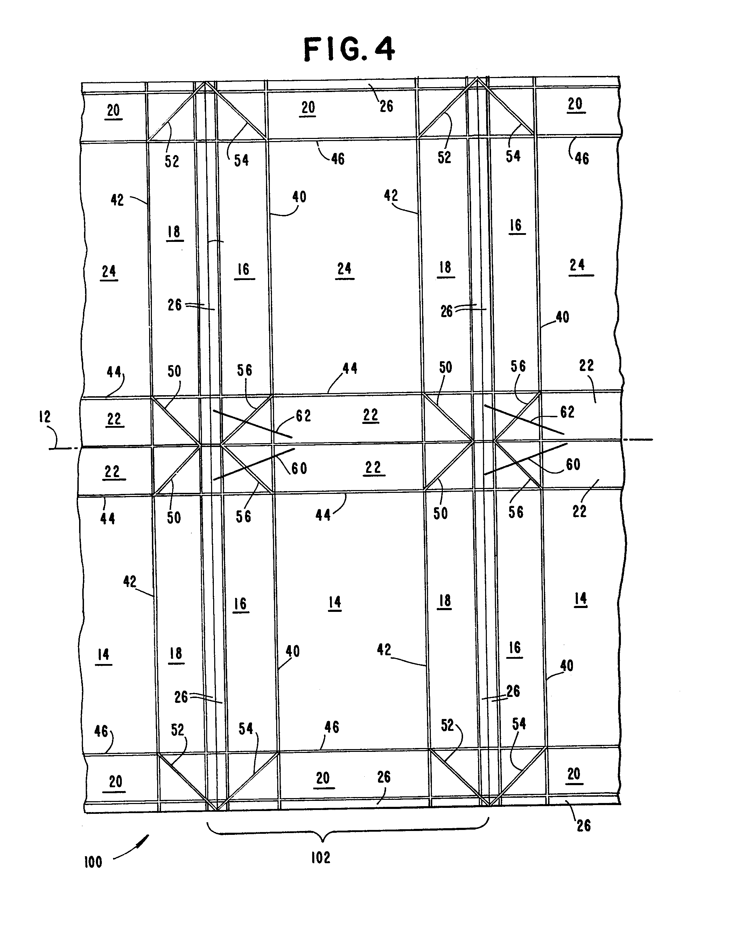

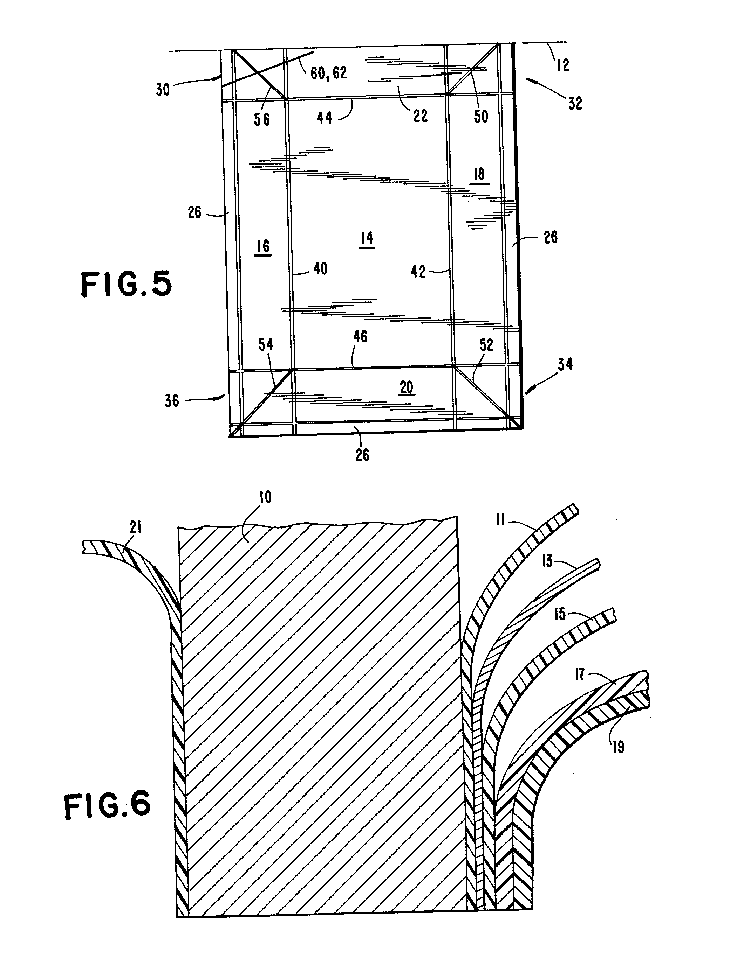

Referring now to Figure 4 of the drawings, the numeral 100 denotes a coated paperboard web of indefinite length which is embossed by conventional means during the form-fill-seal process to form a plurality of fold and score lines, now to be described. A fuller understanding of Figure 4 may be derived from a consideration of Figure 5. Figure 5 represents the carton shown at Figure 1, if the carton were collapsed by pushing front wall 14 and rear wall 24 together, to thereby define a collapsed carton. Thus, what is shown at Figure 5 is the carton of Figure 1 if it were flattened.

That portion of web 100 within vinculum 102 of Figure 4 represents an embossed and partially scored segment, this segment being considered as one complete carton forming cycle, so to speak, in web 100. Fold lines 42 are embossed, for example, on web 100, the lines extending completely across the width of the web. Longitudinally running fold lines also preferably embossed, are denoted by the numerals 44 and 46. The numeral 12 denotes the central longitudinal axis of web 100, this termed the machine direction. As shown at Figure 5, axis 12 represents a fold line about which the area of the web within vinculum 102 could be folded to arrive at the flattened condition of Figure 5.

The numerals 50, 52, 54 and 56 denote diagonal fold lines which also may be embossed, the fold lines extending from the intersection of fold lines 40, 42, 44, and 46 to fin seam portion 26. Score lines 60 and 62 are cut as indicated in web 100, these lines cross diagonal fold lines 56.

The package of Figure 1 is formed from web 100 by cutting and folding the area within vinculum 102 with opposite fin seam areas 26 being joined. The manner of formation of the container of Figure 1 from a continuous web 100, scored and cut as indicated at Figure 4, is known in this art and, accordingly, only a brief description will be offered.

First, printed roll stock is fed directly into a machine and unwinds through longitudinal scoring rolls that mark out the basic package shape. The inner face of the web then travels to a hydrogen peroxide bath where the food contact surface is wetted with the sterilizing agent. The web then travels to a heated stainless steel drum (illustrated in U.S. 3,947,249), where a vigorous reaction takes place between the drum and the packaging material that renders the food contact surface commercially sterile. The sterilized web is under continuous positive sterile air pressure to maintain sterility and remove any residual hydrogen peroxide. After the web is scored latitudinally, the edges are induction sealed. The presterilized product is metered into the tube, the top and bottom edges are induction sealed, and the final package is formed.

Other methods, techniques, apparatus and the like are shown, by way of example only, in U.S. Patents 3,464,181 to Hechenleiter; 3,334,466 to Scholle; and 4,045,939 to Baumstingl.

Typical package dimensions are as follows:

| SIZE | HEIGHT | | |
|------|--------|--------|--------|
| 200 ML. | 82 MM. | 39.5 MM. | 62 MM. |
| 250 ML. | 103 MM. | 39.5 MM. | 62 MM. |
| 500 ML. | 85 MM. | 62 MM. | 95 MM. |
| 1000 ML. | 167 MM. | 62 MM. | 95 MM. |
| QUART | 167 MM. | 62 MM. | 95 MM. |

Referring now to Figure 6 of the drawings, the numeral 10 denotes a typical paperboard core which, with its coatings, defines web 100. The core is coated on one side by a coating 11 of Surlyn, a coating 13 of aluminum foil, a coating 15 of Surlyn, and two layers 17 and 19 of low density polyethylene. The other face of paperboard core 10 may be coated with a single layer 21 of low density polyethylene. The reader will understand that the coatings illustrated at Figure 6 are illustrative as being typical, their selection not being significant for the practice of this invention.

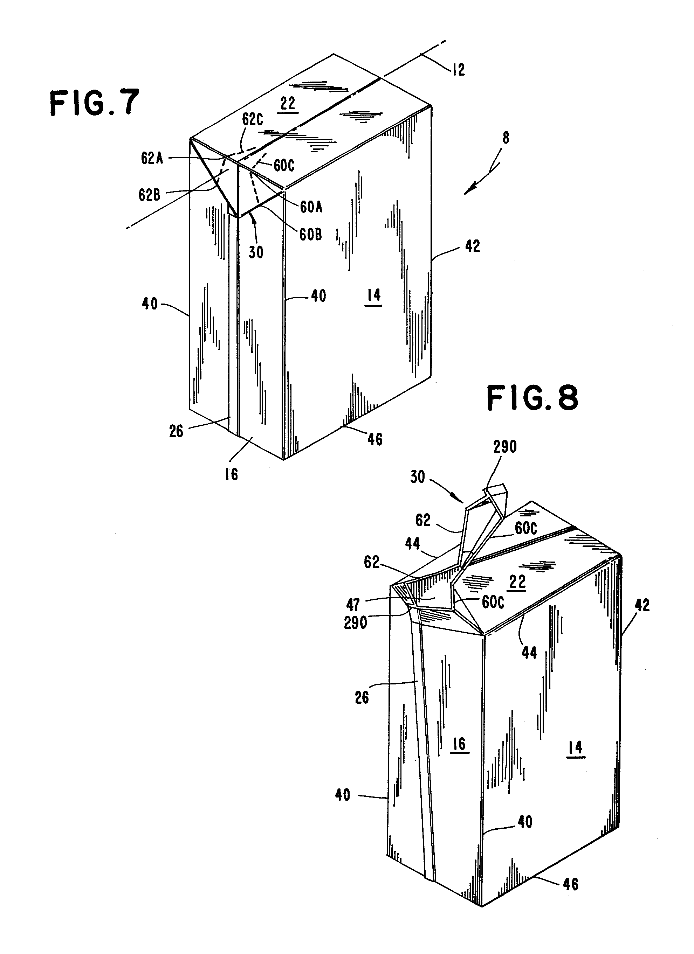

The embodiment of the invention shown in Figure 7 has reference numerals denoting the same elements as in Figure 1. Additionally, the numerals 60C and 62C denote perforated lines running on a converging path as indicated from triangular flap ear 30 towards areas 60A and 62A on top wall 22.

Figure 8 of the drawings shows the carton of Figure 7 when opened to define a pour spout. Opening is effected by pulling the central portion of ear 30 upwardly and around towards and into top surface 22 along perforated lines 60C and 62C, to thereby define a recloseable pour opening, denoted by the numeral 47, which is of sufficient size to permit smooth pouring of the contents of the container. In the condition of Figure 8, the liquid contents of the container or carton 8 may now be dispensed. After partial dispensing of the contents, triangular flap ear 30 and a portion of top wall 22 may be reclosed. It will be observed that the ripping of ear 30 causes a slight bulge in the upper portion of wall 16, as shown in Figure 3. It will be obvious that a similar opening feature can be provided on ear 32 at the opposite end to top wall 22, if desired. In addition, if desired, cut lines may be formed at the point 290 designated which cut lines extend into perforated lines 60 and 62, to facilitate the tearing open of the carton.

As noted before, the containers 8 herein, unlike other brick-shaped packages known to the art, are formed from paperboard webs in which the paper fibers are oriented in the direction that will become the horizontal direction (or parallel to the horizontal axis) of the formed and filled containers when standing upright. Cartons formed from fibers oriented parallel to the horizontal axis are especially suitable for the recloseable opening described herein because the direction of the tear along perforated lines 60C and 62C is the same as the direction of the paper fibers, thereby facilitating the opening of said containers.

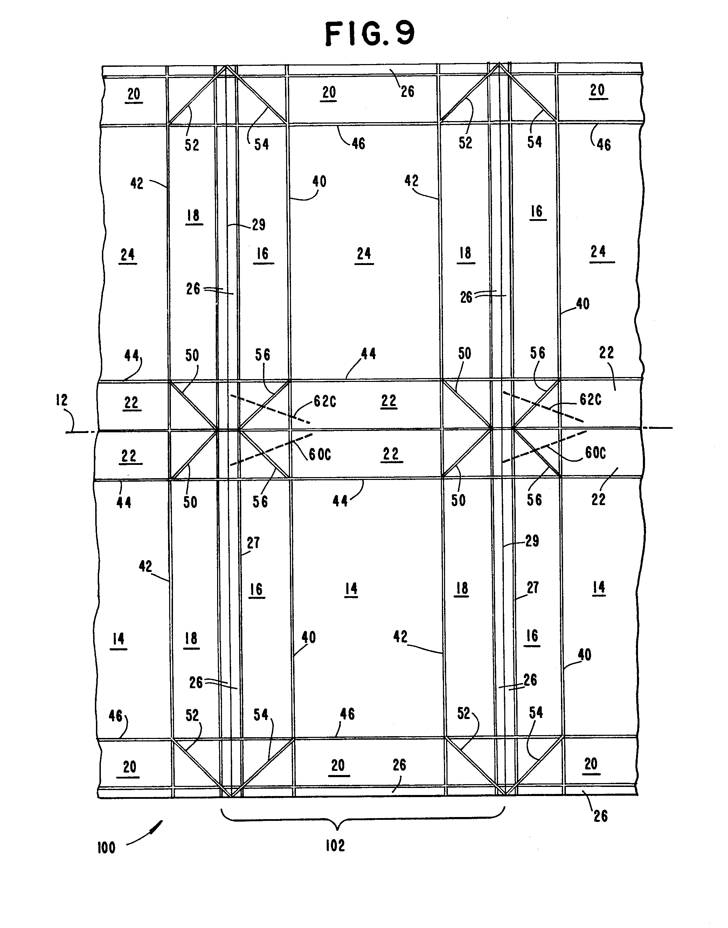

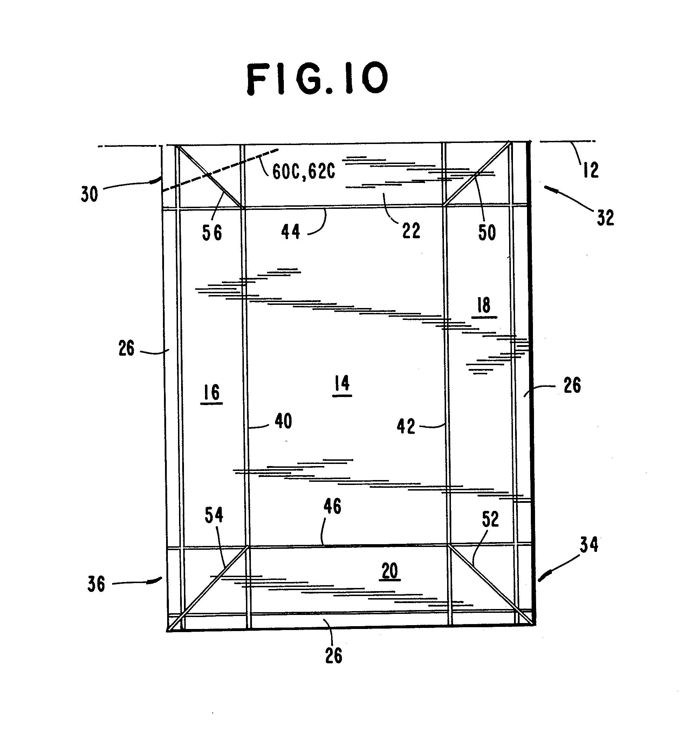

Referring now to Figure 9 of the drawings, the numeral 100 denotes a coated paperboard web of indefinite length which is embossed by conventional means during the form-fill-seal process to form a plurality of fold and score lines, now to be described. A fuller understanding of Figure 9 may be derived from a consideration of Figure 10. Figure 10 represents the carton shown at Figure 7, if the carton were collapsed by pushing front wall 14 and rear wall 24 together, to thereby define a collapsed carton. Thus, what is shown at Figure 9 is the carton of Figure 7 if it were flattened.

That portion of web 100 within vinculum 102 of Figure 9 represents an embossed and partially scored segment, this segment being considered as one completed carton forming cycle, so to speak, in web 100. Fold lines are embossed, for example, on web 100, the lines extending completely across the width of the web. Longitudinally running fold lines, also preferably embossed, are denoted by the numerals 44 and 46. The numeral 12 denotes the central longitudinal axis of web 100, this is termed the machine direction. As shown at Figure 10, axis 12 represents a fold line about which the area of the web within vinculum 102 could be folded to arrive at the flattened condition of Figure 10.

The numerals 50, 52, 54 and 56 denote diagonal fold lines which also may be embossed, the fold lines extending from the intersection of fold lines 40, 42, 44, and 46 to fin seam portion 26. Perforated lines 60 and 62 are formed as indicated in web 100, the axes of these lines crossing diagonal fold lines 56, and lines 40 and lines 27.

The package of Figure 7 is formed from web 100 by cutting and folding the area within vinculum 102 with opposite fin seam areas 26 being joined. The manner of formation of the container of Figure 7 from a continuous web 100, scored and cut as indicated at Figure 9, is substantially the same as described with regard to the container of Figure 1.

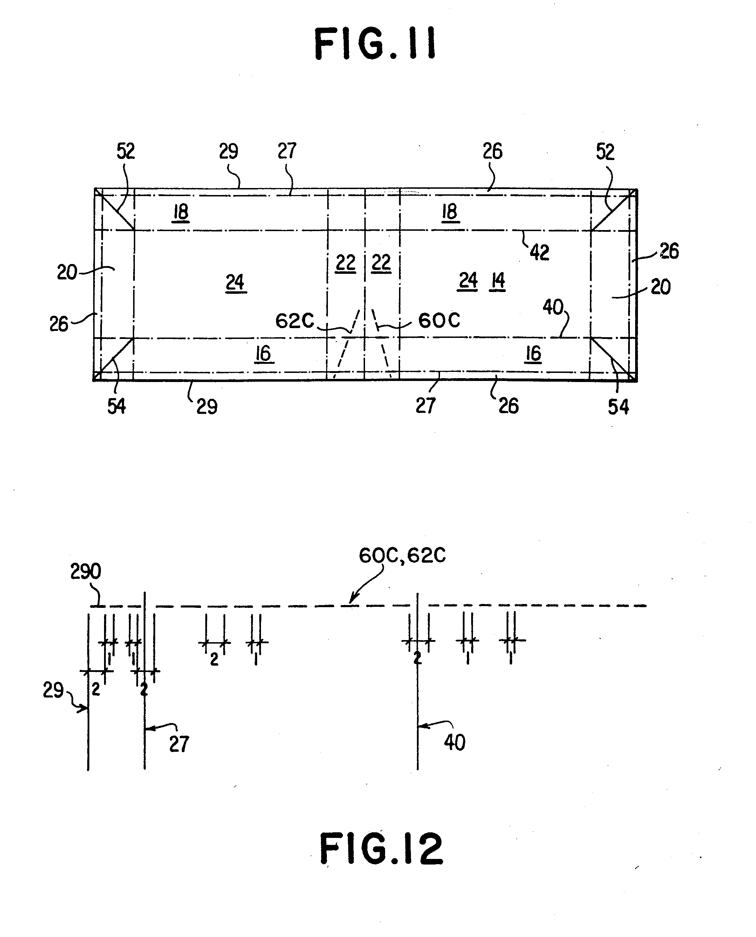

Referring now to Figure 11, an individual package, which has been opened along its fin seams and flattened, is shown, the package bearing the same numerals as those of corresponding continuous packages as stamped on the continuous web 100 of Figure 6. Figure 12 shows the detail of the perforated lines 60C, 62C which form the spout, the dimensions shown at the right of Figure 11 corresponding to certain of the dimensions of Figure 12. For purposes of illustration, the dimensions are given in millimeters (mm).

Starting from a longitudinal edge 29 of the individual package of Figure 11, a perforated line 60C or 62C is initiated by a 2mm cut. Then a space of 1mm uncut laminate follows, in turn followed by a 1mm cut. The spacing and/or pattern of the remainder of the colinear perforations which define lines 60C and 62C is evident from Figure 8. The fold or score line 27 on the individual package of Figure 11 (or the web of Figure 6) is, in the example given, spaced 7mm from blank (or web) edge 29. It will be observed that no perforation intersects score line 27 or score line 40.

Such non-intersection of any perforation of a perforated line with any transverse score or fold line is an important contribution to the art of coated paperboard containers, i.e., containers formed from a laminate, one of whose layers is paperboard. Namely, this non-intersecting construction inhibits delamination.

When a paperboard laminate is folded about a fold line, it assumes a certain set or permanent strain at the fold. Because the paperboard is coated, delamination is to be avoided.

If a cut from a perforated line intersects a fold, the danger of delamination is increased, because the stiffness of the fold in the paperboard is interrupted by the cut. Less stiffness increases the possibility of delamination, i.e., the thermoplastic layer or layers separating from the paperboard. Each fold and each cut represents a working of the paperboard. By working only once, delamination is less of a danger, while working the paperboard twice (in any given region) reduces stiffness and hence increases the possibility of delamination.

Further, the initial 2mm cut facilitates initial tearing and formation of the pour spout. Hence a further contribution to this art resides in commencing a perforated line at an edge of the paperboard laminate. This initial perforation cut is denoted by the numeral 290 at Figure 8, but is too small to be seen at Figure 7. Each cut 290 on a respective perforated line 60C, 62C overlaps the other cut 290 when the package is complete at Figure 1, the cuts being on the parallel, pressed together margins 26 which define the fin seam. The locating of the cuts in the completed package may be further visualized by reference to Figure 3 where the lead lines from numerals 290 indicate the locations, on the fin seam, of the initial cuts. Said cuts 290 serve the purpose of permitting easy opening of the carton and act as a notch by aiding in the initiation of the tearing along perforated lines 60 and 62.

The perforated lines 60, 62 are formed on the web prior to coating the paperboard, and the perforations are cut through about 90% of the cross-section of the laminated board, the coatings representing the other approximately 10% of the laminated board thickness.

Generally speaking the present invention is directed to a carton formed of paperboard coated with one or more liquid impervious layers and particularly adapted to aseptically package a liquid foodstuff such as milk or fruit juice. The

0130666

carton is formed directly from a continuous web, wherein the paper fibers in said web are oriented in the direction parallel to the horizontal axis of the formed and filled cartons, when standing upright. The carton is in the form of a rectangular parallelepiped having a fin seam running along its two side walls and its bottom wall. Each of the four narrowest edges carries a triangular flap ear or corner fold, normally folded against the side wall of the carton. One of the top triangular ears carries a pair of score or perforated lines, which extend into the top wall, this ear swinging away from the carton upon opening, to thereby define a recloseable pour opening upon rupture of the score or perforated lines. The carton of this invention exhibits a flat top, free of a fin seam, and, hence, is better suited for graphics (trademarks, brand names, color combinations, etc.) than other prior art containers which have a fin seam on their top surface.

Although the invention has been described above by reference to a preferred embodiment, it will be appreciated that other carton constructions may be devised, which are, nevertheless, within the scope and spirit of the invention and are defined by the claims appended hereto.

CLAIMS

1. A carton formed of one piece of stiff, resilient and foldable material, such as paperboard, at least the interior of the carton being liquid impermeable, the carton being in the form of a rectangular parallelepiped having a front and rear wall, two side walls, a bottom wall and a top wall, triangular flap ears at each top side wall edge, the base of each said triangular flap ears being coincident with a respective top side wall edge, each triangular flap ear defined by two layers, the outer layer being triangular and extending from the top wall of the carton, the inner layer being triangular and extending from a respective side wall, each triangular flap ear being normally folded and lying against a respective side wall, characterized by at least one of said triangular flap ears provided with means for forming a pour spout therefrom, the side walls and bottom wall each joined together and formed by a continuous fin seam, whereby the top wall of the carton is planar and uninterrupted by a fin seam to thereby present an uninterrupted surface upon which to place graphics, the carton being adapted to be filled with a liquid foodstuff such as milk or fruit juice, that triangular flap ear which is provided with means for forming a pour spout being adapted to be swung away from its normal position and thereafter be partially torn to form a pour spout to dispense the carton contents.

2. The carton of Claim 1 characterized by the means for forming a pour spout on said triangular flap ear being defined by a pair of score lines, the score lines running divergently from a region on the top wall to the shorter edges of the triangle of that triangular flap ear and thence running from said shorter edges to the free edge of said fin seam on said inner layer of said pour spout forming triangular flap ear, whereby when the pour spout forming ear is grasped and pulled away from its normal position, the outer and inner layers of that triangular flap ear will separate somewhat to define a spout and whereby both the outer and the inner layers of that triangular ear flap will rupture to thereby define a tongue which can be displaced to define a pour opening.

3.    The carton of Claim 1 characterized by the paperboard from which said carton is formed comprising paper fibers oriented in the direction that will parallel the horizontal axis of the formed and filled carton.

4.    The carton of Claim 1 characterized by the means for forming a pour spout on said triangular flap ear being defined by a pair of perforated lines, the perforated lines running divergently from a region on the top wall to the shorter edges of the triangle of that triangular flap ear and thence running from said shorter edges to the free edge of said fin seam on said inner layer of said pour spout forming triangular flap ear, whereby when the pour spout forming ear is grasped and pulled away from its normal position, the outer and inner layers of that triangular flap ear will separate to define a spout and whereby both the outer and the inner layers of that triangular ear flap will rupture to thereby define a tongue which can be displaced to define a pour opening, no perforation of the perforated pour spout forming lines intersecting an edge of the package or a fold of the triangular flap ear or a fold of the fin seam, whereby delamination of the laminate is inhibited.

5.    The carton of Claim 4 characterized by the perforated pour spout forming lines commencing at the edges of the paperboard laminate from which the carton is formed, to facilitate initial tearing and formation of the pour spout.

6.    The carton of Claim 1 characterized by the carton, if flattened, being in the form of a rectangular blank folded about its transverse mid axis and sealed along its free edges to thereby define two layers of the sheet material, a parallel fold line on each layer running parallel to each of the four edges of the flattened carton, the fold lines of the two layers being superposed, a diagonal fold line at each of the four corners of the flattened carton extending, on each layer, from the intersection of its associated two intersecting parallel fold lines to the innermost portion of said free edge seal, and means at at least one of the two corners of the flattened carton adjacent the mid axis fold for forming a pour spout.

7.       The carton of Claim 6 characterized by said means comprising a score line on each layer, the score line extending from the outermost edge of the seal, between the fold at the mid axis and the parallel fold line which is parallel to and nearest to the fold of the mid axis, and to a terminal point spaced from the mid axis fold line, the score line intersecting the adjacent diagonal fold line.

8.       The carton of Claim 3 characterized by the paperboard from which said carton being formed comprises paper fibers oriented in the direction that will parallel the horizontal axis of the formed and filled carton.

9.       The carton of Claim 1 characterized by said carton being formed from a continuous web of paperboard, the paperboard coated on at least one surface with a thermoplastic layer to thereby define a laminate, the carton having at least one fold line embossed therein, the fold line adapted to form an edge at the junction of two planar surfaces of the carton to be formed from the web when folded, a perforated line intersecting the at least one fold line, and characterized by no perforation of the perforated line intersecting the at least one fold line, whereby delamination of the paperboard laminate is inhibited.

10.     The carton of Claim 9 characterized by said perforated lines commencing as cuts at the edges of the web from which the carton is formed.

11.     The carton of Claim 1, characterized by said carton being a container formed of paperboard, the paperboard coated on at least one surface with a thermoplastic layer to thereby define a laminate, the container having at least one fold line embossed therein, said at least one fold line forming an edge at the junction of two planar surfaces of the container, a perforated line intersecting the at least one fold line, and characterized by no perforation of the perforated line intersecting the at least one fold line, whereby delamination of the paperboard laminate is inhibited.

12.     The container of Claim 11 characterized by said perforated lines commencing as cuts at the edges of the web from which the container is formed.

**FIG. 1**

22
62
62A
62B
60
60A
60B
30
40
40
26
16
14
42
46
8
12

**FIG. 2**

22
30
32
16
18
14
36
20
34

**FIG. 3**

30
62
60
44
62
60
22
44
26
40
40
46
16
14
42

# FIG. 4

FIG.5

30
60,62
12
32
56
44
22
50
26
18
26
16
14
40
42
54
46
52
20
36
34
26

FIG.6

10
21
11
13
15
17
19

FIG.7

FIG.8

FIG.9

# FIG.10

# FIG.11

# FIG.12